# EUROPÄISCHE PATENTANMELDUNG

(11) **EP 0 884 567 A1**
(43) Veröffentlichungstag der Anmeldung: **16.12.1998**
(21) Anmeldenummer: 98110493.8
(22) Anmeldetag: 08.06.1998
(51) Int. Cl.: G01F 23/284

(54) **System zum Erfassen von Füllständen**

(30) Priorität: 08.06.1997 DE 29709926 U
(71) Anmelder: Sailer, Josef, 87474 Buchenberg (DE)
(72) Erfinder: Sailer, Josef, 87474 Buchenberg (DE)
(74) Vertreter: Fiener, Josef

(57) **Zusammenfassung**

Zur verbesserten Meßgenauigkeit und vereinfachten Handhabung bei einem System zum Erfassen von Füllständen für Pegelmessungen eines Mediums an mindestens einer verschließbaren Meßstelle (1), insbesondere einem Pegelrohr, wird vorgeschlagen, daß auf die Öffnung der Meßstelle (1) ein Mikro- und/oder Radarwellen-Meßaufsatz (10; 20; 30) aufsetzbar ist.

## Beschreibung

Die Erfindung bezieht sich auf ein System zum Erfassen von Füllständen, insbesondere für Grundwasserpegelmessungen in Pegel- und Bohrlöchern.

Bei Pegelmessungen wird der Abstich, d. h. der Höhenunterschied zwischen einem Meßpunkt (in NN) und dem Wasserspiegel in der Meßstelle im allgemeinen auf einen Zentimeter genau gemessen. Dabei wird der ermittelte Wert des Grundwasserstandes unter Angabe der Meßstellennummer und des Zeitpunkts von Mitarbeitern des zuständigen Wasserwirtschaftsamtes noch überwiegend handschriftlich protokolliert, was eine Fehlerquelle aufgrund von Vervechselungen oder Schreibfehlern darstellt. Der regelmäßige zeitliche Abstand der Messungen liegt im allgemeinen zwischen wöchentlichen und jährlichen Messungen. Zum Teil sind aber auch kontinuierliche Messungen erforderlich, z. B. bei Flußlaufregulierungen.

Zur Überwachung der Pegelstände werden in der Regel Lote in die Meßstellen hinabgelassen. Dies ist jedoch aufwendig und daher zeitraubend und unwirtschaftlich, zumal die Messungen zur Sicherheit stets zweifach auszuführen sind. Zudem werden bei unverrohrten Bohrlöchern Partikel von deren Wand gelöst, was auf Dauer zu einer Verschlammung und Verschmutzung des Pegel- bzw. Bohrlochs führt.

Um dies zu vermeiden ist auch der Einsatz von Drucksensoren bekannt. Bei diesen tritt jedoch im allgemeinen ein physikalisches Driften mit negativen Auswirkungen auf die Meßgenauigkeit auf.

Füllstandsmeßvorrichtungen, bei denen zur Messung des Füllstands eines Mediums in einem Behälter oder Tank Radarvellen verwendet werden, sind aus dem Stand der Technik in verschiedener Form bekannt. Bei derartigen Vorrichtungen werden zunehmend Radarwellen höherer Frequenzen verwendet, da mit steigender Frequenz die Genauigkeit der Messung verbessert wird und die Radarwellen unter einem kleineren Abstrahlwinkel, also stärker fokussiert, von der Antenne abgestrahlt werden.

Zur stärkeren Bündelung bzw. Führung von Radar- bzw. Mikrowellenstrahlen in Richtung eines Flüssigkeitsspiegels beschreibt die DE 43 27 333 C2 einen langen rohrförmigen Mikrowellenleiter, der unterhalb der Antenne angeordnet ist. Durch diesen Aufbau wird das von einem Flüssigkeitsspiegel reflektierte Meßsignal gegenüber einem Aufbau ohne den Mikrowellenleiter einerseits vergrößert. Andererseits werden unerwünschte Reflexionen von Oberflächen des Behälters außerhalb des Mikrowellenleiters unterdrückt. Der Einsatz von Hohlwellenleitern ist z. B. auch aus der DE 195 32 646 A1 bekannt.

In der DE 195 10 484 A1 wird weiterhin der Einsatz von zylindrischen Oberflächenwellenleitern, insbesondere von dielektrischen Stabstrahlern offenbart. Bei den beschriebenen Stabstrahlern, die zugleich als Sende- und Empfangsantenne eingesetzt werden, treten Mikrowellenstrahlen an Stellen aus den Strahlern heraus, an denen sich deren Querschnitt ändert. Zudem finden Reflexionen der Wellen an den Stellen des Stabes statt, an denen sich die Dielektrizitätszahl des den Strahler umgebenden Mediums ändert.

Diese Vorrichtungen sind jedoch groß und aufwendig gebaut sowie fest an einer Behälteröffnung befestigt, die speziell zur Füllstandsmessung vorgesehen ist.

Eine Füllstandsmeßvorrichtung für kontinuierliche Messungen, bei der ebenfalls Hohlleiter eingesetzt werden, ist aus dem DE 94 12 243 U1 bekannt, wobei die Abdichtung vereinfacht werden soll. Ein Füllstandsmeßgerät weist einen Flansch auf, der zwischen dem Flansch eines Behälters und einer Flanschauflage eingeklemmt wird. Die eingesetzten Strahler sind dabei stab-, horn- oder trichterförmig ausgebildet. Diese Meßgeräte sind zwar kompakt gebaut, jedoch sind auch sie für kontinuierliche Messungen stationär montiert.

Bei der Überwachung von Grundwasserständen in Bohr- oder Pegellöchern ist in zeitlich regelmäßigen Abständen neben der Messung des Wasserpegels auch die Entnahme von Wasserproben erforderlich. Insbesondere sind weiterhin im Pegelloch in bestimmten zeitlichen Abständen auch Messungen von z. B. Druck, Temperatur, Leitfähigkeit, pH-Wert und Sauerstoff erforderlich. Eine solche Sonde zur Überwachung der Wassergüte ist aus dem DE 94 04 367 U1 bekannt. Bei dieser Sonde erfolgt die Signalverarbeitung direkt im Sondenkörper.

Für Grundwasserüberwachungen sind daher aufwendig abzunehmende und wieder aufzusetzende Meßverschlüsse wie bei den vorstehend genannten Systemen ungeeignet. Dies gilt insbesondere, wenn die Messungen an einer Vielzahl von Meßstellen vorzunehmen sind. Weitere Probleme entstehen durch eine z. T. große Entfernung zwischen Erdoberfläche und dem Wasserspiegel, bei der störende Reflexionen an den Rändern des Pegellochs entstehen, wenn von oben aus gemessen wird.

Der Erfindung liegt daher die Aufgabe zugrunde, ein System zum Erfassen von Füllständen hinsichtlich der erzielbaren Meßgenauigkeit und Handhabung zu verbessern.

Die vorstehende Aufgabe wird durch ein System zum Erfassen von Füllständen gemäß den Merkmalen des Anspruches 1 gelöst.

Bei diesem System sind durch den einfachen Aufbau mit Aufsetzen des Meßaufsatzes besonders genaue, schnelle und zügige Messungen durchführbar. Dabei sind Fehler durch eine Verwechslung von Meßstellennummern und Schreibfehler nicht mehr möglich. Zudem werden neben Meßwerten auch Randparameter wie Uhrzeit und Datum oder Angaben über das Meßpersonal automatisch in eine Datenbank übernommen. Insbesondere sind eine zügige Übertragung der Meßwerte in einen zentralen Computer sowie eine schnelle Bearbeitung der erfaßten Daten möglich. Durch das weiterhin mögliche Herablassen des Meßkopfs in das Pegelloch wird die Meßgenauigkeit weiter erhöht. Besonderes vorteilhaft ist die Verwendung einer dielektrischen Linse, da in diesem Falle keine Bohrloch-Verrohrung aus Metall erforderlich ist.

Weitere vorteilhafte Ausgestaltungen sind Gegenstand von abhängigen Ansprüchen.

Ausführungsbeispiele der Erfindung werden nachstehend anhand der Zeichnung näher erläutert. Es zeigen:
- Fig. 1: eine Pegelmeßstelle mit einem Radarsensorkopf gemäß einem ersten Ausführungsbeispiel,
- Fig. 2: eine Pegelmeßstelle mit einem absenkbaren Radarsensorkopf gemäß einem zweiten Ausführungsbeispiel,
- Fig. 3: eine Dipolantenne für ein Pegelrohr aus Metall in Draufsicht,
- Fig. 4: einen Radarmeßkopf mit einer Antenne in teilweise geschnittener Seitenansicht für Messungen in einem Pegelrohr, und
- Fig. 5: den Strahlengang der Radarwellen des Radarmeßkopfs der Fig. 4 in schematischer Darstellung.

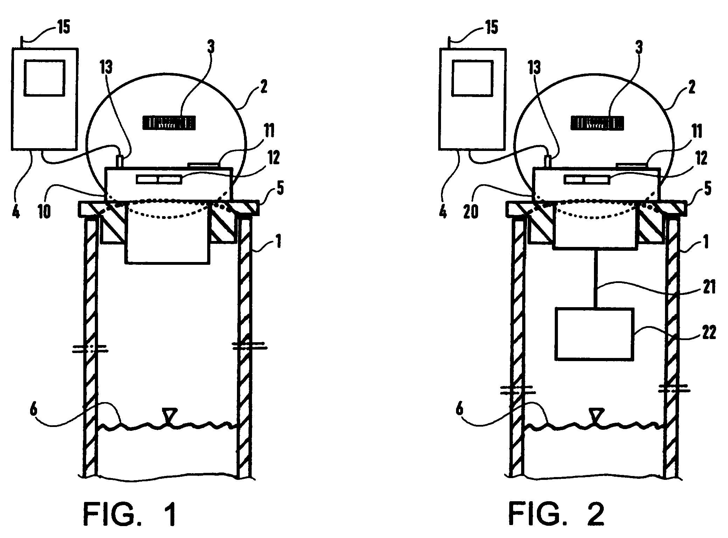

Wie aus Fig. 1 ersichtlich, weist eine Meßstelle 1 in Form eines Pegelrohr an einer Grundwasser-Meßstelle eine zylindrische Wandung und einen Deckel 2 auf, der zum Durchführen von Messungen abgenommen oder, wie dargestellt, aufgeklappt werden kann, ansonsten aber zum Verschluß des Pegelrohres bzw. der Meßstelle 1 dient. Das Pegelrohr besteht vorzugsweise aus Metall, so daß es als ein Hohlwellenleiter für Radarwellen wirkt.

An der Innenseite des Deckels 2 ist eine Codierung 3 in Form eines Barcodeschild befestigt, das per Barcodeleser eines tragbaren Handheld-PCs 4 (oder Notebookrechners) ablesbar ist. Die Codierung 3 enthält zumindest die Nummer der Meßstelle 1, vorzugsweise aber auch weitere Informationen über diese. Neben dieser Codierung 3 sind die wesentlichen Angaben zur Identifizierung der jeweiligen Meßstelle 1 ohne ein Lesegerät auf das Barcodeschild 3 auch in Form einer Zahl in arabischen Ziffern bzw. Buchstaben aufgedruckt. Barcodes können auch auf einer Codetabelle aufgedruckt sein, die von dem Meßpersonal mitgeführt wird.

Auf die offene Öffnung der Meßstelle 1, insbesondere einen Randkragen 5 des Pegelrohrs ist ein Meßaufsatz bzw. Radar-Meßkopf 10 aufgesetzt. Der Radar-Meßkopf 10 umfaßt an seiner Unterseite eine Radar- bzw. Mikrowellenantenne zum Aussenden eines Radarsignals in das Pegelrohrloch und zum Empfangen von Reflexionen von einer Flüssigkeitsoberfläche 6 und/oder dem Boden des Pegelrohrs. Zudem ist in dem Radar-Meßkopf 10 eine Steuerschaltung zur Steuerung und Verarbeitung von Signalen, sowie Speicherung von Meßwerten aufgenommen. Die Stromversorgung des Radar-Meßkopfs 10 erfolgt über Batterien oder Akkumulatoren, die insbesondere über ein Solarpanel 11 wiederaufladbar sind. In den Rand und/oder die Oberseite des Radar-Meßkopfs 10 ist eine LCD- bzw. Flüssigkristallanzeige 12 zum Anzeigen der gemessenen und ggf. daraus berechneten Meßwerte eingesetzt.

Die Anzeige dient in Verbindung mit einer Tastatur auch zur Steuerung bzw. Eingabe von Parametern oder Steuerbefehlen. Über beispielsweise eine PCMCIA-Karte, die z.B. neben der Anzeige 12 in einen Kartenleseschlitz eingesteckt werden kann oder eine RS232-Schnittstelle 13 können Meßdaten aus dem Radar-Meßkopf 10 aus- und in den Handheld-PC 4 eingelesen werden. Daten zur Identifizierung oder zur Steuerung des Radar-Meßkopfs 10 können zwischen diesem und dem Handheld-PC 4 ebenfalls ausgetauscht werden.

Anstatt Daten von einem Barcode 3 einzulesen, können diese Angaben zusammen mit anderen Daten über die Meßstelle 1 auch direkt über eine solche Schnittstelle 13 in den Handheld-PC oder sonstigen Rechner 4 übertragen werden. In dem Handheld-PC 4 können zudem benutzerspezifische Programme abgespeichert werden, die eine Vorauswahl von Meßstellen oder Vorab-Auswertung von Meßdaten durchführen. Auch können vor oder nach einer Meßreihe persönliche Daten der die Messungen durchführenden Person zusammen mit den Meßdaten, bevorzugt auf eine Chip-Karte gemäß dem genannten PCMCIA-Standard abgespeichert werden. Daneben können zu jeder Meßstelle besondere Informationen über Schäden, Vergleichsdaten etc. abgespeichert werden. Eine derartige Chip-Karte kann auch als Zugangsberechtigung, insbesondere zum Datenauslesen verwendet werden.

Über ein Funkmodem 15 können die Daten vom Handheld-PC oder direkt vom Radar-Meßkopf 10 aus auch unmittelbar per Funk zu einem Meßfahrzeug oder einer Zentrale übertragen werden. Dort ist z. B. auf einem leistungsstarken Zentralrechner eine elektronische Berechnung bzw. Auswertung von Zufluß-, Abflußund Mittelwerten sowie eine Anfertigung von Karten des Grundwasserspiegels durchführbar. Weiterhin kann der Meßaufsatz 10 an eine GPS-Positionserfassung angekoppelt sein, so daß eine genaue Vermessung und Zuordnung der jeweiligen Meßstelle 1 erzielt wird.

Wie aus Fig. 2 ersichtlich, ist bei einem zweiten Ausführungsbeispiel auf den Randkragen 5 der zylindrischen Wandung des Pegelrohrs der Meßstelle 1 ein Meßaufsatz 20 mit einer Absenkeinrichtung aufgesetzt. In die Absenkeinrichtung ist ein Meßkopf bzw. Radarsensorkopf 22 eingesetzt, der an einem Kabelzug 21 oder dergleichen aufgehängt ist. Bei Messungen in tiefen Pegellöchern mit einem großen Abstich bzw. tief liegendem Grundwasserspiegel kann der Radarsensorkopf 22 an dem Kabelzug 21 in dem Pegelrohr der Meßstelle 1 abgesenkt werden, um so Störeinflüsse durch Reflexionen von der Pegellochwand hinter der Wandung des Pegelrohrs zu verringern.

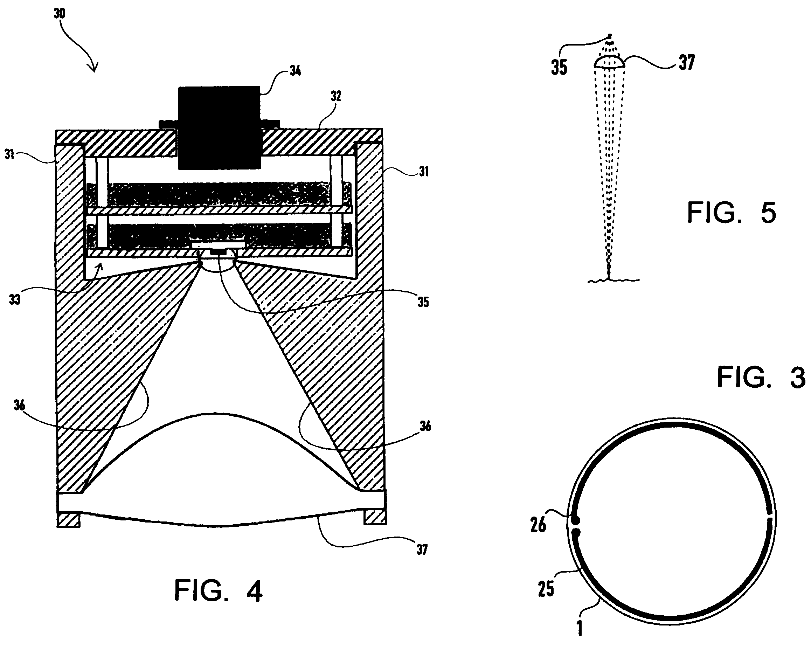

Der Kabelzug 21 weist integrierte Leitungen (Kabel oder Lichtwellenleiter) zum Übertragen von Signalen und/oder Strom auf und dient auch zum Datenaustausch zwischen dem Radarsensorkopf 22 und dem Meßaufsatz 20. Im Meßaufsatz 20 befindet sich neben einer Steuer- und Auswerteschaltung (33 in Fig. 4) auch eine Meßeinheit, die zur weiteren Datenverarbeitung auch die Ablaßtiefe des Radarsensorkopfs 22 erfaßt, z. B. über die Umdrehungszahl einer Wickeltrommel für den Kabelzug 21.

Um einen besonders einfach bauenden Antennendipol gemäß Fig. 3 aus im wesentlichen zwei halbkreisförmigen Antennenelementen 25, 26 einsetzen zu können, besteht das Pegelrohr der Meßstelle 1 bevorzugt aus Metall.

Wie aus Fig. 4 ersichtlich, weist ein besonders bevorzugter Radarsensorkopf bzw. Meßkopf 30 ein zylindrisches Gehäuse 31 mit einem Deckel 32 an seinem ersten offenen Ende auf. Vom Deckel 32 aus ragt eine Steuereinrichtung 33 in das Gehäuse 31 hinein. Die Steuereinrichtung 33 ist über eine durch den Deckel 32 der Meßstelle 1 führende Steckverbindung 34 an eine nicht dargestellte externe Steuerung anschließbar. Der Stecker der Steckverbindung 34 dient auch zur Befestigung des Meßkopfs 30 an einem oben beschriebenen Kabelzug 21.

An der Steuereinrichtung 33 ist an deren vom Deckel 32 abgewandter Seite ein mm-Wellen-Chip 35 zentral befestigt. Dieser mm-Wellen-Chip 35 dient zum Senden und Empfangen einer Radarwelle. Die erzeugten Wellen werden von einem Antennenkörper 36 aufgenommen. Der Antennenkörper 36 ist hier, jedoch nicht zwingend, Bestandteil des Gehäuses 31 und führt von dessen zweitem offenen Ende zum mm-Wellen-Chip 35 hin. Dabei verengt sich der Antennenkörper 36 von dem zweiten Ende aus trichterförmig zum mm-Wellen-Chip 35 hin.

In das untere Ende des Gehäuses 31 ist eine dielektrische Linse 37 eingesetzt. Die Linse 37 ist so gekrümmt, daß die Radarwellen, die durch den Antennenkörper 36 wandern und von diesem abgestrahlt werden, mit einer flachen Wellenkrümmung aus dem Meßkopf 30 austreten, d. h. eine starke Richtcharakteristik innerhalb des Pegelrohres der Meßstelle 1 aufweisen. Ein beispielhafter Strahlengang ist in Fig. 5 skizziert. Bei einer ausreichend starken Richtcharakteristik muß das Pegelloch in diesem Falle nicht mehr mit einem Metallrohr verrohrt sein, da vom Pegellochrand nur noch schwache Reflexionen reflektiert werden, die die Meßgenauigkeit nicht oder kaum mehr beeinträchtigen.

Das beschriebene Meßsystem ist auch für Messungen z. B. in Tanks, an Stauseen oder Flußwassermeßstellen einsetzbar, insbesondere wenn an diesen Einrichtungen ein Pegelrohr zur Flüssigkeitsoberfläche hinführt und in diese hineinragt.

## Patentansprüche

1. System zum Erfassen von Füllständen für Pegelmessungen eines Mediums an mindestens einer verschließbaren Meßstelle (1), insbesondere einem Pegelrohr,
dadurch **gekennzeichnet,**
daß auf die Öffnung der Meßstelle (1) ein Mikro- und/oder Radarwellen-Meßaufsatz (10; 20; 30) aufsetzbar ist.

2. System nach Anspruch 1,
dadurch **gekennzeichnet,**
daß die Öffnung der Meßstelle (1) mittels eines abnehmbaren oder aufklappbaren Deckels (2) verschließbar ist.

3. System nach Anspruch 1 oder 2,
dadurch **gekennzeichnet,**
daß im Meßaufsatz (10; 20; 30) eine Steuerschaltung (33) zur Erfassung und Verarbeitung von Daten, insbesondere Meßdaten und meßstellenspezifischen Daten aufgenommen ist.

4. System nach Anspruch 3,
dadurch **gekennzeichnet,**
daß die Daten an ein externes Datenerfassungsgerät (4), insbesondere einen Handheld-PC oder ein Notebook übertragbar sind.

5. System nach Anspruch 2 und 4,
dadurch **gekennzeichnet,**
daß am Deckel (2) eine meßstellenspezifische Codierung (3) angebracht ist, die mit einem entsprechenden Lesegerät, insbesondere einem Barcodeleser erfaßbar und in dem Datenerfassungsgerät (4) abspeicherbar und/oder verarbeitbar ist.

6. System nach einem der vorhergehenden Ansprüche,
dadurch **gekennzeichnet,**
daß Daten vom Meßaufsatz (10; 20; 30) direkt oder über ein weiteres Datenerfassungsgerät (4) an eine zentrale Stelle über Kabel oder Funk übertragbar sind.

7. System nach einem der vorhergehenden Ansprüche,
dadurch **gekennzeichnet,**
daß eine Antenne (31; 36) direkt am Meßaufsatz (10; 30) befestigt ist.

8. System nach einem der Ansprüche 1 bis 6,
dadurch **gekennzeichnet,**
daß eine Antenne (31; 36) an einem Sensorkopf (22) befestigt ist, der vom Meßaufsatz (20) aus in die Meßstelle (1), insbesondere einem Pegelrohr absenkbar ist, wobei die Ablaßtiefe vorzugsweise automatisch erfaßbar und mit den Meßdaten verarbeitbar ist.

9. System nach einem der vorhergehenden Ansprüche,
dadurch **gekennzeichnet,**
daß eine Vielzahl von Meßstellen (1) durch zeitweises Aufsetzen eines einzigen Meßaufsatzes (10; 20; 30) für die Erfassung von Daten ausgebildet ist.

10. System nach einem der vorhergehenden Ansprüche,
dadurch **gekennzeichnet,**
daß die Meßstelle (1) ein Pegelrohr aus Metall ist.

11. System nach einem der vorhergehenden Ansprüche,
dadurch **gekennzeichnet,**
daß die einen Antennenkörper (36) verlassenden Wellen durch eine Linse (37) gerichtet werden.

12. System nach einem der vorhergehenden Ansprüche,
dadurch **gekennzeichnet,**
daß die Meßstellen (1) zur Erfassung eines Grundwasserstands, eines Flüssigkeitsstands in einem Tank, eines Wasserstands an Stauseen oder Flußwassermeßstellen ausgebildet sind.

13. System nach einem der vorhergehenden Ansprüche,
dadurch **gekennzeichnet,**
daß die Stromversorgung des Meßaufsatzes (10; 20; 30) über ein Solarpanel (11) erfolgt.

14. System nach einem der vorhergehenden Ansprüche,
dadurch **gekennzeichnet,**
daß der Meßaufsatz (10; 20; 30) mit einer Positionserfassung (GPS) und/oder einer Vermessungseinrichtung gekoppelt ist.

15. System nach einem der vorhergehenden Ansprüche,
dadurch **gekennzeichnet,**
daß der Meßaufsatz (10; 20; 30) eine Schnittstelle (13) für Chip-Karten zur Datenerfassung und/oder Identifikation der jeweiligen Meßstelle (1) aufweist.
